# EUROPÄISCHE PATENTSCHRIFT

(11) **EP 0 530 482 B1**
(45) Veröffentlichungstag und Bekanntmachung des Hinweises auf die Patenterteilung: **30.11.1994**
(21) Anmeldenummer: 92112536.5
(22) Anmeldetag: 22.07.1992
(51) Int. Cl.: B30B 15/00, B01J 3/06, B22F 5/00, B22F 3/02

(54) **Verfahren zur Herstellung von metallischen Sinterkörpern sowie Sinterkörper, insbesondere Presswerkzeuge**
Process for preparing sintered metallic articles and articles obtained thereby, in particular press tools
Procédé pour la préparation d'articles métalliques frittés ainsi que les articles obtenus, en particulier outils de pressage

(30) Priorität: 08.08.1991 DE 4126211; 03.01.1992 DE 4200065
(43) Veröffentlichungstag der Anmeldung: 10.03.1993
(73) Patentinhaber: ERNST WINTER & SOHN (GMBH & CO.), D-20259 Hamburg (DE)
(72) Erfinder: Borse, Dietrich, W-2000 Hamburg 61 (DE)
(74) Vertreter: Minetti, Ralf, Dipl.-Ing.

(56) Entgegenhaltungen:
- EP-A- 0 038 647
- DE-A- 3 220 916
- DE-C- 626 407
- US-A- 3 735 648
- PATENT ABSTRACTS OF JAPAN vol. 14, no. 127 (M-947)9. März 1990 & JP-A-13 20 115 (KOBE STEEL) 26. Dezember 1989

## Beschreibung

Die Erfindung betrifft die Herstellung von großen Sinterkörpern aus Hartmetall und zwar insbesondere von Hartmetallstempeln und Hartmetallmatrizen, die als Preßwerkzeuge für die Ultrahochdrucksynthese von Diamant oder kubischem Bornitrid sowie für die Ultrahochdrucksinterung von polykristallinem Diamant oder polykristallinem kubischen Bornitrid verwendet werden.

Derartige Hartmetallstempel und Hartmetallmatrizen sind als wesentliche Bestandteile der "Belt"- oder "Girdle"-Preßapparate bekannt. Andere Ultrahochdruck-Preßapparate sind nach dem Vielstempelprinzip konstruiert. Sie erfordern keine Matrize. Beispiele dafür sind der Tetraeder-Preßapparat mit vier Stempeln und der Kubus-Preßapparat mit sechs Stempeln. Bei diesen Preßapparaten ist die Form der Stempel ähnlich wie bei den oben genannten Preßapparaten. Anstelle eines Kegelstumpfes weisen sie eine abgestumpfte Dreieckspyramide bzw. eine abgestumpfte quadratische Pyramide auf.

Die Herstellung von Hartmetallstempeln und -matrizen für kleinere Preßapparate, die für experimentelle Synthesen ausreichend sind, bereitet nach dem Stand der Technik keine größeren Probleme. Für die industrielle Produktion von Diamant und kubischem Bornitrid bzw. für die erwähnten entsprechenden polykristallinen Produkte werden aber zunehmend größere Preßapparate benötigt mit entsprechend großen Stempeln und Matrizen.

Das betrifft Stempel, deren Durchmesser der Preßfläche größer als 40 mm ist, deren Durchmesser der Basisfläche größer als 80 mm ist und deren Höhe größer als 60 mm ist. Entsprechend betrifft das Matrizen, deren Innendurchmesser größer als 40 mm ist, deren Außendurchmesser größer als 120 mm ist und deren Höhe größer als 60 mm ist.

Da die Entwicklung zu größeren Ultrahochdruck-Preßapparaten anhält, ist eine obere Begrenzung der Dimensionen solcher Hartmetallstempel und -matrizen zur Zeit nicht absehbar.

Ein typisches Beispiel für große Stempel und Matrizen sind Stempel, deren Durchmesser der Preßfläche 120 mm beträgt, deren Durchmesser der Basisfläche 240 mm beträgt und deren Höhe 180 mm beträgt. Die entsprechenden Matrizen haben einen Innendurchmesser von ca. 120 mm, einen Außendurchmesser von 360 mm und eine Höhe von 120 mm.

Je größer die Stempel und Matrizen sind, um so problematischer ist der Sinterprozeß für ihre Herstellung.

Die Herstellung von Hartmetallteilen erfolgt durch Pressen und Sintern von Pulvergemischen aus Hartcarbid und Bindemetall. Stempel und Matrizen für die Ultrahochdrucktechnik werden vorzugsweise aus Mischungen von Wolframcarbid und Cobalt als Bindemetall hergestellt.

Diese Ausgangspulver sind feinkörnig und werden durch gemeinsame Naßmahlung weiter verfeinert und noch inniger vermischt. Anschließend wird die Pulvermischung für den Preßvorgang durch Granulierung präpariert. Dazu wird ein Granuliermittel verwendet, das üblicherweise aus Paraffin oder Wachs besteht und dessen Anteil etwa 0,5 % Gew. bis 2 % Gew. beträgt. Das Pressen größerer "Grünlinge" (Rohkörper) erfolgt vorzugsweise in Gummiformen mit einem Druck von 100 bis 200 MPa im kaltisostatischen Preßverfahren. Danach kann eine, die Maße korrigierende Formgebung durch Zerspanung vorgenommen werden, bei der die bei der eigentlichen Sinterung entstehende Schrumpfung (linear ca. 20 %) berücksichtigt wird. Meist wird die formgebende Bearbeitung aber erst nach der Vorsinterung durchgeführt.

Die Vorsinterung der Preßteile wird mit ansteigender Temperatur ausgeführt. Die Endtemperatur beträgt ca. 970 K bis 1170 K. im ersten Teil dieser Vorsinterung, im Temperaturbereich bis ca. 700 K, wird das Granulierbindemittel herausgedampft ("Entwachsung"). Im anschließenden höheren Temperaturbereich der Vorsinterung entweichen Gase (CO, CO₂, H₂O, CH₄), die bei der Wechselwirkung von restlichen Metalloxiden mit dem Kohlenstoffanteil und der Ofenatmosphäre im Sinterkörper entstehen. Beim Abschluß der Vorsinterung ist der Sinterkörper noch feinporös, aber weitgehend rein, das heißt von Dampf- oder Gas-abgebenden Rückständen befreit.

Durch die Vorsinterung findet noch keine größere Sinterschrumpfung statt. Die Teile lassen sich aber gut handhaben und mechanisch bearbeiten, um entsprechend der zu erwartenden totalen Schrumpfung beim folgenden eigentlichen Sinterprozeß die vorgesehenen Fertigmaße möglichst genau zu erreichen.

Die abschließende Sinterung der Hartmetallteile erfolgt unter Wasserstoffatmosphäre oder vorzugsweise im Vakuum. Beim Temperaturanstieg bis zur Endtemperatur, die, je nach Hartmetallsorte,das heißt je nach Zusammensetzung und gewünschtem Gefüge, zwischen 1600 K und 1900 K liegen kann, tritt flüssige Phase auf, die schließlich zum porenfreien oder fast porenfreien Dichtsintern führt.

Dieser hier gekürzt beschriebene Fertigungsgang der Hartmetallsinterung ist exemplarisch und typisch für die Herstellung von Stempeln und Matrizen für die Ultrahochdruck-Preßtechnik.

Ein kritischer Teil des Verfahrens für die Herstellung der erwähnten großen Hartmetallteile ist die Vorsinterung, insbesondere die Entwachsung und die Entgasung. Außerdem ist auch der erste Teilabschnitt der abschließenden Sinterung betroffen, in dem noch offene Poren existieren, die von der meist reaktiven Gasatmosphäre erreicht werden sollen oder durch das Vakuum von Gasen befreit werden sollen.

Die Austreibung der Wachs- bzw. Paraffinanteile, der raktive Gasaustausch und die Entgasung müssen bei großen Sinterkörpern mit feinkörnigem, weitgehend vorverdichtetem Preßgefüge über relativ lange, vielfältig verzweigte und sehr enge Passagen erfolgen. Diese Verhältnisse liegen bei kleineren Sinterkörpern wegen der kürzeren Wege vom Innern zur Oberfläche relativ günstig und stellen kein besonderes Problem dar. Bei den großen Sinterkörpern wirken sich aber die langen Passagen ungünstig aus. Die Zeiten für die Zwischentemperaturen der Vorsinterungen müssen daher Überproportional zur Größe der Teile verlängert werden.Dadurch wird der Fertigungsaufwand wesentlich erhöht. Die Gefahr, daß trotz verlängerter Zeiten für die Entwachsung Zersetzungsrückstände zurückbleiben, die zur Verfälschung des Kohlenstoffgehaltes führen oder daß Aufblähungen bei der Verdampfung der Wachsrückstände zu Porenbildung führen, nimmt mit der Größe der Sinterquerschnitte zu. Außerdem sind die Bedingungen für die Reduzierung restlicher Oxide ungünstiger, weil die Wasserstoffzufuhr und die Ableitung der gasförmigen Oxidationsprodukte stark behindert werden. Schließlich wird die durch das von außen wirkende Vakuum angestrebte Entgasung der Poren im Innern großer Querschnitte behindert.

Da die großen Hartmetallsinterteile aber für extreme Belastungen vorgesehen sind, so daß in ihren höchst beanspruchten Querschnitten der Elastizitätsbereich mehr oder weniger überschritten wird, wirkt sich auch die kleinste Qualitäts- bzw. Festigkeitsminderung auf ihre technische Belastbarkeit und damit auf ihre Funktionsfähigkeit entscheidend aus.

Aufgabe der Erfindung ist es, die geschilderten Behinderungen des Gasaustausches und der Ausdampfung durch eine Verbesserung des Sinterprozesses zu beseitigen, zumindest jedoch zu verringern. Dafür ist vorgesehen, vor der Vorsinterung oder vor der abschließenden Sinterung, den Sinterkörper mit einem oder mehreren Kanälen für Dämpfe und Gase zu versehen, damit die Entwachsung, der Gasaustausch und die Evakuierung wesentlich weniger behindert werden.

Da die Oberflächen der Sinterkörper in den Bereichen ihrer höchsten Beanspruchung möglichst nicht durch Öffnungen unterbrochen werden sollen und die höchstbelasteten Querschnitte nicht durch Kanäle, Bohrungen, Löcher verkleinert und dadurch geschwächt werden sollen, sieht die Erfindung vor, daß die Kanäle von weniger belasteten Oberflächen ausgehend durch weniger belastete Querschnitte an die höchst belasteten Querschnitte herangeführt sind. Dabei kann es sich handeln um Blindkanäle bzw. Sacklochbohrungen, wie auch um durchgängige Kanäle bzw. Bohrungen.

Vorzugsweise werden diese Kanäle nach dem Pressen, also vor der Vorsinterung angebracht, weil dadurch der Vorgang der Entwachsung begünstigt wird.

Die Entgasungskanäle lassen sich auf unterschiedliche Weise anbringen. Länge, Verlaufsform und Querschnitt der Kanäle können verschiedenartig gestaltet werden.

Die Entgasungskanäle lassen sich nach dem Pressen des Sinterkörpers anbringen, indem mit einem Metallbohrer entsprechende Löcher gebohrt werden.

Andererseits lassen sich die Kanäle schom beim Pressen herstellen, indem in die Pulverfüllung der Preßform Stifte, Stäbe oder Drähte eingelegt und in dieser Lage eingepreßt werden. Nach dem Pressen des Sinterkörpers werden diese Teile entfernt. Zweckmäßig sind zylindrische oder konische Stäbe aus Metall oder aus Plastik. Für besonders dünne Kanäle lassen sich Drähte verwenden.

Stäbe aus Wachs brauchen nach dem Pressen nicht mechanisch entfernt zu werden, weil sie bei der Vorsinterung ausgedampft werden.

Stäbe aus grob-porösem Material, wie z. B. Aluminiumoxid oder grob-porös vorgesintertes Hartmetall, können ebenfalls als Gaspassage verwendet werden. Sie brauchen ebenfalls nach dem Vorsintern nicht entfernt zu werden.

Die im dem fertig gesinterten Metallkörper verbleibenden Öffnungen haben keine Nachteile zur Folge. Sollten solche Öffnungen aus speziellen technischen Gründen unerwünscht sein, so lassen sie sich verschließen, etwa durch Einpressen, Einlöten oder Einkleben von Stäben, Stiften oder Pulvern aus Metall bzw. anderen Materialien. Wenn z. B. keine Flüssigkeiten oder Verunreinigungen in die Kanäle gelangen sollen, können sie mit Gießharz verschlossen werden.

Ausführungsbeispiele der Erfindung sind nachstehend unter Bezugnahme auf eine Zeichnung erläutert. Darin zeigen:
- Figur 1:: Eine Matrize mit zwei Stempeln bekannter Ausführungen in schematischer Darstellung;
- Figuren 2 bis 5:: Stempel verschiedener Ausführungen und
- Figuren 6 bis 11:: Matrizen verschiedener Ausführungen.

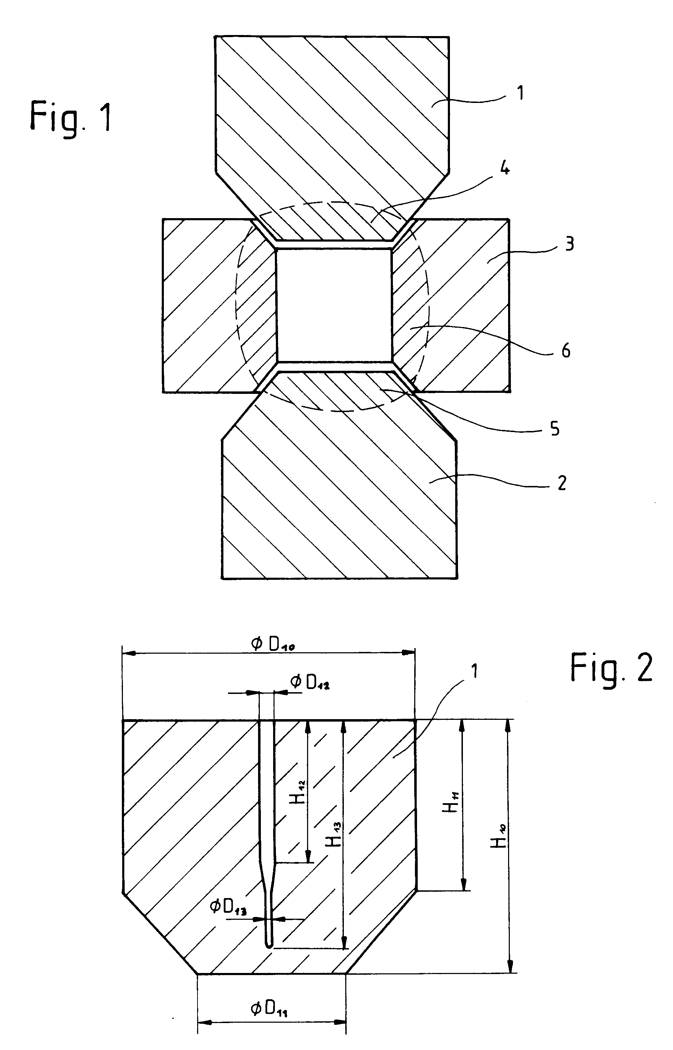

Figur 1 zeigt in schematischer Darstellung einen Preßapparat mit zwei Stempeln 1 und 2 sowie einer Matrize 3, welche Verwendung finden für die Ultrahochdrucksynthese von Diamant sowie für die Ultrahochdrucksinterung von polykristallinem Diamant. Dabei werden Stempel 1 und 2 sowie die Matrize 3 in einem durch die Schraffur wiedergegebenen Bereich 4, 5 und 6 ihres Querschnittes extrem hoch beansprucht und zwar vor allem durch einen außergewöhnlich hohen Druck von über 4,0 GPa und zusätzlich dazu durch Temperaturen von über 500 K. Diese sehr hohe Beanspruchung tritt also auf an den Oberflächen, welche den Reaktionsraum umschließen sowie den dahinterliegenden Querschnitten der Stempel 1 und 2 sowie der Matrize 3.

Bei den Stempeln 1 und 2 sowie der Matrize 3 handelt es sich um Hartmetallkörper, die im Sinterverfahren hergestellt sind. Um die bei der Herstellung der Werkzeuge auftretenden Probleme zu vermindern bzw. die Werkzeuge unter optimierten Bedingungen sintern zu können, sind die Werkzeuge mit Entgasungsbohrungen bzw. Entgasungskanälen versehen, welche allgemein in der Zeichnung mit 8 bezeichnet sind.

Die Figur 2 zeigt einen Stempel 1, der mit nur einer Entlastungsbohrung 8 versehen ist, welche sich konzentrisch von der Oberseite des Stempels in Richtung auf seine Stempelfläche erstreckt und im unteren Abschnitt verjüngt ausgebildet ist. Dieser Entgasungskanal erstreckt sich damit von einer weniger beanspruchten Querschnittsfläche des Stempels in Richtung auf eine höher beanspruchte Querschnittsfläche, in welcher der Kanal jedoch von geringerem Durchmesser D13 ist.

Der Stempel 1 hat eine Gesamthöhe H10, die sich zusammensetzt aus der Höhe Hll seines zylindrischen Teiles sowie der Höhe des anschließenden kegelförmigen Teiles. Der Gesamtdurchmesser bzw. Außendurchmesser ist mit D10 bezeichnet und der Durchmesser der Preßfläche mit D11. Die einzige Entgasungsbohrung weist einen Durchmesser auf von D12 im Bereich einer Höhe von H12 sowie einen Durchmesser D13 für den restlichen Abschnitt der Gesamthöhe H13.

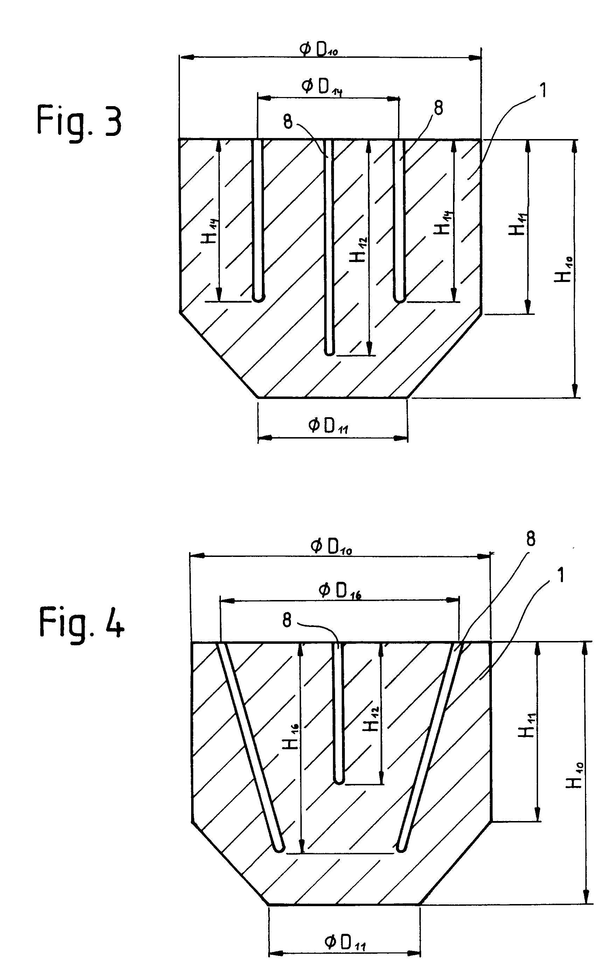

Figur 3 zeigt einen Stempel mit einer zentrisch angeordneten Entgasungsbohrung 8 und weiteren konzentrisch angeordneten Entgasungsbohrungen 8. Die Maße des fertiggesinterten Hartmetallkörpers betragen

| | |
|---|---|
| Basisdurchmesser des Stempels 1 | D₁₀: 240 mm (ca. 290 mm) |
| Durchmesser der Preßfläche | D₁₁: 120 mm (ca. 145 mm) |
| Gesamthöhe | H₁₀: 180 mm (ca. 215 mm) |
| Höhe des zylindrischen Teils | H₁₁: 100 mm (ca. 120 mm) |

In Klammern sind die Maße des Preßkörpers vor dem Vorsintern angegeben.

Die Herstellung des Preßkörpers erfolgt durch kaltisostatisches Pressen eines WC-Co-Pulverganulats, das 1,5 % Paraffinwachs als Granulier- und Preßhilfsmittel enthält.

Vor der Vorsinterung wird der Preßkörper mit sieben Bohrungen versehen. Die Bohrungen haben einen Durchmesser von 5 mm. Die zentrale Bohrung hat eine Tiefe von H₁₂ = 165 mm. Die übrigen sechs Bohrungen sind gleichmäßig auf einen Kreis mit D₁₄ = 140 mm Durchmesser verteilt und haben eine Tiefe von H₁₄ = 140 mm. Beim Sintern verkürzen sich die Maße der Bohrungen um ca. 20 %.

Der fertige Sinterkörper wird abschließend auf die angegebenen Sollmaße geschliffen. Da die Bohrungen in dieser Anordnung für die Verwendung des Sinterkörpers als Ultrahochdruckstempel keinen Nachteil bedeuten, werden sie nicht bearbeitet und nicht verschlossen.

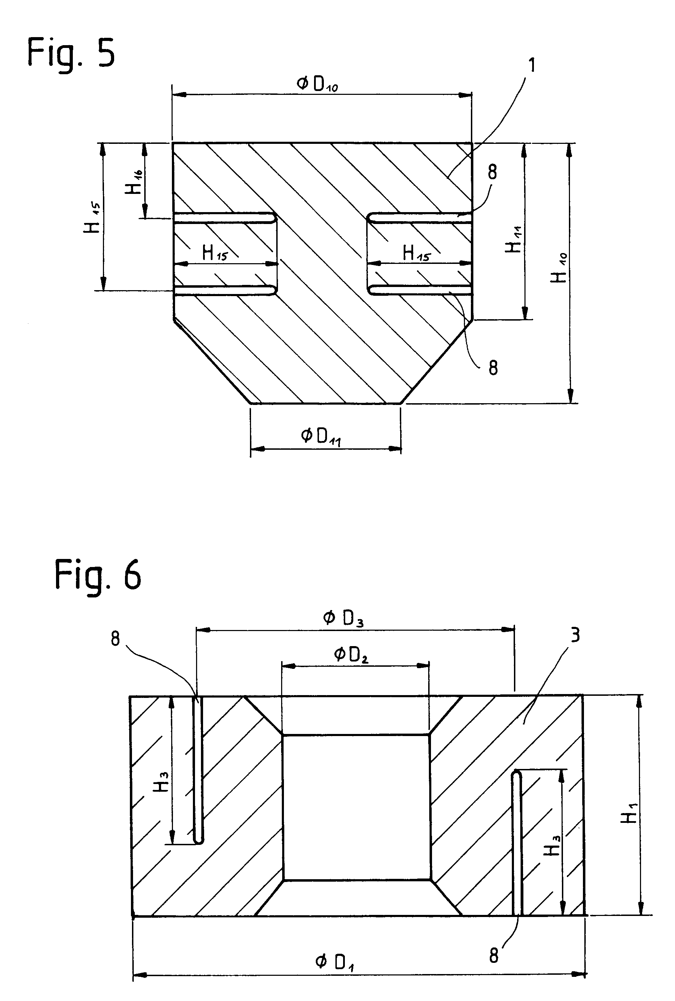

Figur 4 zeigt einen Sinterkörper, bei dem die außenliegenden Entgasungskanäle von größerer Länge bzw. Tiefe H₁₆ sind, als der zentrisch angeordnete Kanal mit der Höhe H₁₂. Die außenliegenden Kanäle sind außerdem schräg axial ausgerichtet. Sie gehen aus von einem Teilkreis mit einem Durchmesser D₁₆, der größer ist als der Durchmesser des Teilkreises D₁₄ entsprechend Figur 3.

Figur 5 zeigt die Anordnung von sich radial erstreckenden Entgasungskanälen 8, die jeweils auf Teilkreisen liegen mit den Abständen H₁₅ und H₁₆ von der Oberseite des Stempels.

Es besteht die Möglichkeit, ergänzend zu den dargestellten Ausführungsbeispielen den Stempel mit Entgasungskanälen zu versehen, welche radial und axial verlaufen.

Die Figur 6 zeigt das Ausführungsbeispiel einer Matrize 3 mit einem Außendurchmesser D₁ und einem Innendurchmesser D₂ sowie Entgasungsbohrungen 8 mit einer Länge H₃, die sich axial erstrecken von Teilkreisen mit dem Durchmesser D₃. Diese Entgasungsbohrungen verlaufen sowohl von der Unterseite der Matrize nach oben wie auch in umgekehrter Richtung.

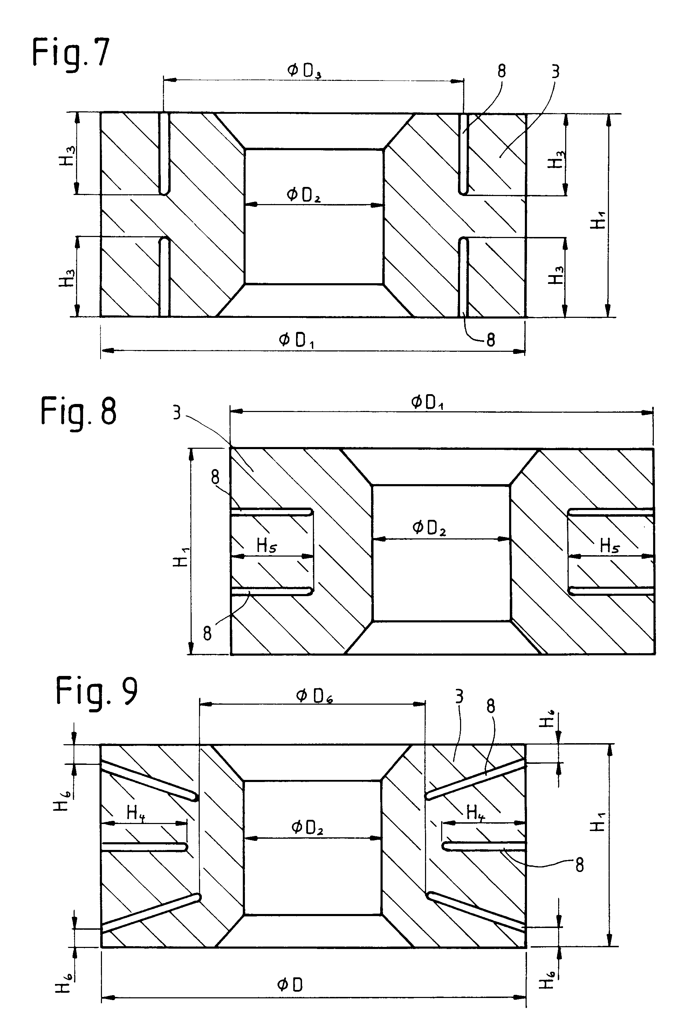

Figur 7 zeigt eine ähnliche Anordnung, wobei jedoch die Entgasungskanäle 8 kürzer ausgebildet sind, so daß sie in einer Querschnittsebene sich gegenüberliegend verlaufend angeordnet sind.

Figur 8 zeigt eine Ausführung mit radial angeordneten Entgasungskanälen 8, die in verschiedenen Höhen der Matrize 3 auf Teilkreisen liegend angeordnet sind.

Bei der Ausführung nach Figur 9 sind die Entgasungskanäle teilweise radial ausgerichtet und teilweise schräg in Richtung auf die Achse bzw. die Preßkammerwandung ausgerichtet.

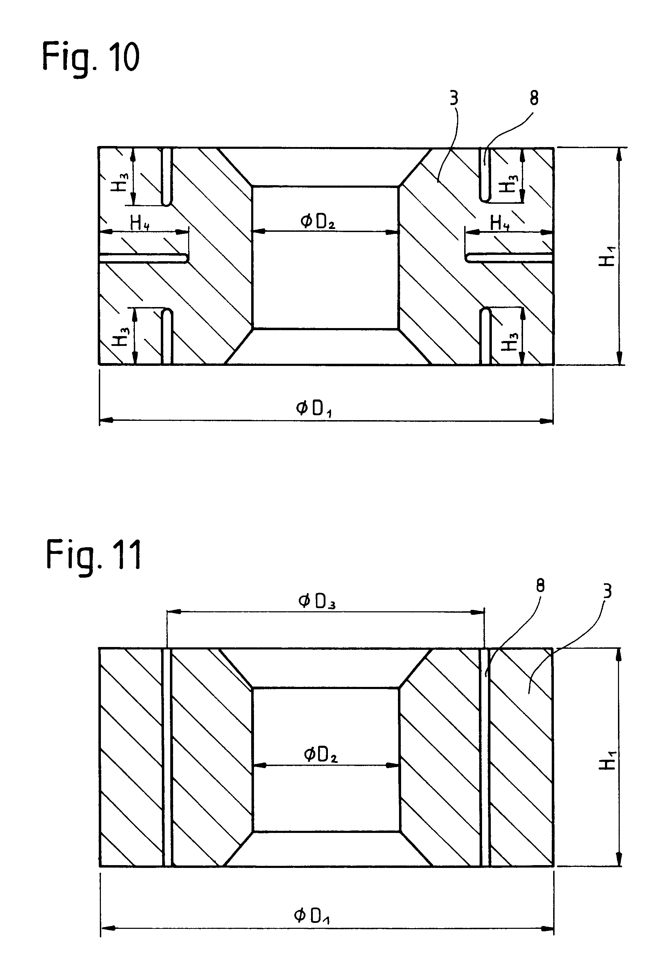

Figur 10 zeigt die Kombination von radial und axial ausgerichteten Entgasungskanälen in einer Matrize 3.

Figur 11 zeigt eine Matrize 3 mit durchgehenden Entgasungskanälen 8 bzw. Bohrungen.

Die Maße des fertig gesinterten Hartmetallkörpers 3 betragen:

| | |
|---|---|
| Außendurchmesser | D₁: 360 mm (ca. 430 mm) |
| Innendurchmesser | D₂: 120 mm (ca. 145 mm) |
| Höhe | H₁: 120 mm (ca. 145 mm). |

In Klammern sind die Maße des Preßkörpers vor dem Vorsintern angegeben.

Die Herstellung des Preßkörpers erfolgt durch kaltisostatisches Pressen eines WC-Co-Pulvergranulats, das 1,7 % Paraffinwachs als Granulier- und Preßhilfsmittel enthält.

Vor der Vorsinterung wird der Preßkörper mit durchgehenden Bohrungen 8 versehen. Die Bohrungen 8 haben einen Durchmesser von 6 mm und sind in gleichmäßigem Abstand auf einem Kreis mit D₃ = 300 mm verteilt. Nach dem Sintern beträgt der Durchmesser dieses Teilkreises ca 250 mm.

Der fertige Sinterkörper wird abschließend auf die angegebenen Sollmaße geschliffen und als Ultrahochdruckmatrize verwendet. Die Bohrungen werden nicht bearbeitet. Sie können bei der Verwendung der Ultrahochdruckmatrize als Kanäle für Kühlflüssigkeit verwendet werden.

## Patentansprüche

1. Verfahren zur Herstellung von metallischen Sinterkörpern, insbesondere Preßwerkzeugen, dadurch gekennzeichnet, daß vor dem Sintern des Preßkörpers (1, 2, 3) in dem Preßkörper (1, 2, 3) Entgasungskanäle (8) angeordnet werden.

2. Verfahren nach Anspruch 1, dadurch gekennzeichnet, daß die Entgasungskanäle (8) vor dem Vorsintern des Preßkörpers (1, 2, 3) angeordnet werden.

3. Verfahren nach Anspruch 1, dadurch gekennzeichnet, daß die Kanäle (8) derart angeordnet werden, daß sie bei einem Gebrauch des Sinterkörpers als ein Preßwerkzeug von den weniger belasteten Oberflächenbereichen ausgehend durch weniger belastete Bereiche des Querschnittes geführt werden.

4. Verfahren nach Anspruch 1, dadurch gekennzeichnet, daß die Entgasungskanäle (8) als Sacklochbohrungen ausgebildet werden.

5. Verfahren nach Anspruch 1, dadurch gekennzeichnet, daß die Entgasungskanäle (8) als durchgängige Kanäle ausgebildet werden.

6. Hartmetallsinterkörper, dadurch gekennzeichnet, daß der Sinterkörper als Stempel (1, 2) oder Matrize (3) eines Preßapparates ausgebildet ist und mit Entgasungskanälen (8) versehen ist, die an seiner Außenseite in weniger belasteten Querschnittsbereichen münden.

7. Hartmetallsinterkörper nach Anspruch 6, dadurch gekennzeichnet, daß die Entgasungskanäle (8) als Sacklochbohrungen ausgebildet sind, die ausgehend von geringer belasteten Querschnittsbereichen sich in höher belastete Querschnittsbereiche erstrecken.

8. Hartmetallsinterkörper nach Anspruch 6, dadurch gekennzeichnet, daß die Entgasungskanäle (8) als durchgängige Bohrungen ausgebildet sind.

9. Hartmetallsinterkörper nach Anspruch 6, dadurch gekennzeichnet, daß die Entgasungskanäle (8) axial und/oder radial ausgerichtet sind und sich an die Oberseite und/oder Außenseite des Preßwerkzeuges (1, 2, 3) erstrecken.

10. Hartmetallsinterkörper nach Anspruch 6, dadurch gekennzeichnet, daß der Sinterkörper als ein Preßstempel (1) ausgebildet ist, der mit einem Entgasungskanal (8) versehen ist, welcher als Sacklochbohrung (8) ausgebildet ist und zentrisch angeordnet von der Oberseite des Stempels sich in Richtung auf die Stempelfläche erstreckt.

11. Hartmetallsinterkörper nach Anspruch 6, dadurch gekennzeichnet, daß die Entgasungskanäle (8) einen Durchmesser aufweisen von 2 bis 8 mm.

12. Hartmetallsinterkörper nach Anspruch 6, dadurch gekennzeichnet, daß die Entgasungskanäle (8) auf konzentrischen Teilkreisen angeordnet sind.

13. Hartmetallsinterkörper nach Anspruch 6, dadurch gekennzeichnet, daß der Sinterkörper ein Ultrahochdruckstempel (1) ist, dessen größter Durchmesser (D10) größer ist als 80 mm und dessen Gesamthöhe (H10) größer ist als 60 mm.

14. Hartmetallsinterkörper nach Anspruch 6, dadurch gekennzeichnet, daß der Sinterkörper eine Ultrahochdruckmatrize ist, deren Innendurchmesser (D2) größer ist als 40 mm, deren Außendurchmesser (D1) größer ist als 120 mm und deren Gesamthöhe (H1) größer ist als 60 mm.

## Claims

1. Process for producing sintered metallic articles, particularly press tools, characterized in that degasifying channels (8) are placed in the press body (1, 2, 3) before the sintering of the press body (1, 2, 3).

2. Process according to claim 1, characterized in that the degasifying channels (8) are placed before the presintering of the press body (1, 2, 3).

3. Process according to claim 1, characterized in that the channels (8) are placed such that they are guided, when using the sintered article as a press tool, starting from the less loaded surface areas through less loaded areas of the section.

4. Process according to claim 1, characterized in that the degasifying channels (8) are formed as blind bore holes.

5. Process according to claim 1, characterized in that the degasifying channels (8) are formed as through channels.

6. Hard metal sinter article, characterized in that the sinter article is formed as punch (1, 2) or matrix (3) of a press apparatus and is provided with degasifying channels (8) which run at its outer face in less loaded section areas.

7. Hard metal sinter article according to claim 6, characterized in that the degasifying channels (8) are formed as blind bore holes which extend starting from less loaded section areas to more loaded section areas.

8. Hard metal sinter article according to claim 6, characterized in that the degasifying channels (8) are formed as through bore holes.

9. Hard metal sinter article according to claim 6, characterized in that the degasifying channels (8) are orientated axially and/or radially and extend at the upper face and/or outer face of the press tool (1, 2, 3).

10. Hard metal sinter article according to claim 6, characterized in that the sinter article is formed as a press punch (1) which is provided with a degasifying channel (8) which is formed as blind bore hole (8) and extends centered from the upper face of the punch in direction of the punch surface.

11. Hard metal sinter article according to claim 6, characterized in that the degasifying channels (8) have a diameter between 2 and 8 mm.

12. Hard metal sinter article according to claim 6, characterized in that the degasifying channels (8) are placed on concentrical partial circles.

13. Hard metal sinter article according to claim 6, characterized in that the sinter article is a ultrahigh pressure punch (1), the biggest diameter of which (D10) is higher than 80 mm and the total height of which (H10) is higher than 60 mm.

14. Hard metal sinter article according to claim 6, characterized in that the sinter article is a ultrahigh pressure matrix, the inner diameter of which (D2) is higher than 40 mm, the outer diameter (D1) is higher than 120 mm and the total height (H1) is higher than 60 mm.

## Revendications

1. Procédé pour la fabrication d'articles métalliques frittés, en particulier d'outils de pressage, **caractérisé en ce** que des canaux de dégazage (8) sont placés dans la pièce pressée (1, 2, 3) avant le frittage de la pièce pressée (1, 2, 3).

2. Procédé selon la revendication 1, **caractérisé en ce** que les canaux de dégazage (8) sont placés avant le préfrittage de la pièce pressée (1, 2, 3).

3. Procédé selon la revendication 1, **caractérisé en ce** que les canaux (8) sont placés de telle manière qu'ils sont guidés, lors de l'utilisation de l'article fritté comme un outil de pressage, en partant des zones superficielles moins chargées par les zones moins chargées de la section.

4. Procédé selon la revendication 1, **caractérisé en ce** que les canaux de dégazage (8) sont configurés comme des perçages à trou borgne.

5. Procédé selon la revendication 1, **caractérisé en ce** que les canaux de dégazage (8) sont configurés comme des canaux traversants.

6. Article fritté en métal dur, **caractérisé en ce** que l'article fritté est configuré comme le poinçon (1, 2) ou la matrice (3) d'un appareil de pressage et qu'il est pourvu de canaux de dégazage (8) qui aboutissent sur sa face extérieure dans des zones de section moins chargées.

7. Article fritté en métal dur selon la revendication 6, **caractérisé en ce** que les canaux de dégazage (8) sont configurés comme des perçages à trou borgne qui s'étendent en partant des zones de section moins chargées dans les zones de section plus chargées.

8. Article fritté en métal dur selon la revendication 6, **caractérisé en ce** que les canaux de dégazage (8) sont configurés comme des forures traversantes.

9. Article fritté en métal dur selon la revendication 6, **caractérisé en ce** que les canaux de dégazage (8) sont dirigés axialement et/ou radialement et s'étendent sur la face supérieure et/ou sur la face extérieure de l'outil de pressage (1, 2, 3).

10. Article fritté en métal dur selon la revendication 6, **caractérisé en ce** que l'article fritté est configuré comme un poinçon de pressage (1) qui est pourvu d'un canal de dégazage (8) qui est configuré comme une forure à trou borgne (8) et qui s'étend en étant placé de manière centrée de la face supérieure du poinçon dans le sens de la surface du poinçon.

11. Article fritté en métal dur selon la revendication 6, **caractérisé en ce** que les canaux de dégazage (8) présentent un diamètre de 2 à 8 mm.

12. Article fritté en métal dur selon la revendication 6, **caractérisé en ce** que les canaux de dégazage (8) sont placés sur des cercles parties concentriques.

13. Article fritté en métal dur selon la revendication 6, **caractérisé en ce** que l'article fritté est un poinçon à très haute pression (1) dont le plus grand diamètre (D10) est supérieur à 80 mm et dont la hauteur totale (H10) est supérieure à 60 mm.

14. Article fritté en métal dur selon la revendication 6, **caractérisé en ce** que l'article fritté est une matrice à très haute pression dont le diamètre intérieur (D2) est supérieur à 40 mm, dont le diamètre extérieur (D1) est supérieur à 120 mm et dont la hauteur totale (H1) est supérieure à 60 mm.
